# EUROPÄISCHE PATENTSCHRIFT

(11) **EP 0 838 371 B1**
(45) Veröffentlichungstag und Bekanntmachung des Hinweises auf die Patenterteilung: **13.06.2001**
(21) Anmeldenummer: 97118517.8
(22) Anmeldetag: 24.10.1997
(51) Int. Cl.: B60R 1/06

(54) **Aussenspiegel für ein Fahrzeug**
Exterior mirror for a vehicle
Rétroviseur extérieur pour véhicule

(30) Priorität: 25.10.1996 DE 19644658
(43) Veröffentlichungstag der Anmeldung: 29.04.1998
(73) Patentinhaber: Donnelly Hohe GmbH & Co. KG, 97903 Collenberg (DE)
(72) Erfinder: Köhler, Gisbert, 85229 Niederroth (DE)
(74) Vertreter: Zinngrebe, Horst, Dr.rer.nat.

(56) Entgegenhaltungen:
- EP-A- 0 166 378
- EP-A- 0 305 590
- EP-A- 0 400 452
- GB-A- 2 102 364
- US-A- 4 893 916

## Beschreibung

Die Erfindung betrifft einen Außenspiegel für ein Fahrzeug gemäß dem Oberbegriff des Anspruchs 1.

Ein gattungsgemäßer Außenspiegel ist aus dem Dokument US-A-4,893,916 bekannt.

Die Schrift GB-B-2 102 364 beschreibt eine elektromotorische Verstellung des in einem Spiegelgehäuse innerhalb eines vorgegebenen Winkelbereichs verstellbar gelagerten Spiegels um eine erste Achse sowie um eine weitere, dazu senkrechte Achse, wobei zwei Getriebemotore die Verstellung des Spiegels in eine vom Fahrer des Fahrzeugs gewünschte Winkelposition bewirken können.

Aus der Schrift EP-A-0 166 378 ist es bekannt, daß das Spiegelgehäuse um eine zweite Achse mit Hilfe eines Elektromotors an das Fahrzeug beigeklappt werden kann, wobei das Spiegelgehäuse einem Schlag durch Überwinden von Rasten bei nicht aktiviertem Elektromotor ausweichen kann.

Für die Montage eines Außenspiegels mit motorisch beiklappbarem Spiegelgehäuse und motorisch verstellbarem Spiegel ist wegen der dazu benötigten drei Motoren und deren Verdrahtung ein erheblicher Aufwand und Platzbedarf erforderlich. Die Herabsetzung dieses Aufwandes ist daher Aufgabe der Erfindung.

Bei einem Außenspiegel der eingangs genannten Art sind dazu erfindungsgemäß die Merkmale des kennzeichens des Anspruchs 1 vorgesehen. Mit der Erfindung ist es grundsätzlich möglich, den Spiegel um die erste und die zweite Achse zu verstellen und das Spiegelgehäuse um die zweite Achse motorisch beizuklappen. Dafür wird nur ein einziger Elektromotor benötigt, so daß der erwähnte Montageaufwand und auch der erforderliche Bauraum wesentlich reduziert sind.

Zweckmäßig ist das erste Abtriebsorgan des Elektromotors seine Abtriebswelle und das zweite Abtriebsorgan das Motorgehäuse. Die Verstellung des Spiegels um die zweite Achse wird in Weiterbildung der Erfindung dadurch erleichtert, daß das zweite Abtriebsorgan des Motors über eine elektromagnetische Kupplung mit dem Spiegelgehäuse verbunden ist. Soll der Spiegel unter Beibehaltung seines aktuellen Verstellwinkels bezüglich der ersten Achse um die zweite Achse verstellt werden, braucht lediglich durch Betätigen der elektromagnetischen Kupplung das zweite Abtriebsorgan am Spiegelgehäuse festgelegt zu werden. In jedem Fall empfiehlt es sich, die aktuelle Winkelstellung des Spiegels bei Auslösen des Beiklappens in einem Speicher abrufbar zu speichern. Die Anordnung des Elektromotors im Spiegelgehäuse wird besonders einfach, wenn die erste und die zweite Achse sich quer zueinander erstrecken oder das erste Abtriebsorgan sich im wesentlichen parallel zur ersten Achse erstreckt. Als besonders günstige Gestaltung des Gelenks empfiehlt sich ein Exzenter am zweiten Abtriebsorgan des Motors, der über eine Kurbel mit dem Spiegel gelenkig verbunden ist.

Weitere bevorzugte Ausgestaltungen der Erfindung sind in den Unteransprüchen angegeben.

Die Erfindung wird nachstehend anhand des in der beigefügten Zeichnung dargestellten Ausführungsbeispiels im einzelnen beschrieben. Es zeigen:
- Fig. 1: die schematische Darstellung eines längs der Abtriebswelle des Elektromotors genommenen Querschnitts durch einen Außenspiegel; und

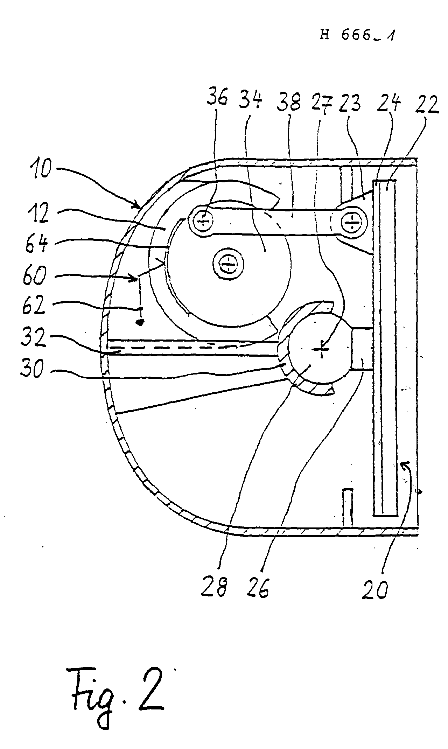

- Fig. 2: eine schematische Darstellung des Schnittes durch den Außenspiegel nach Fig. 1 längs der Linie A-A.

Das Bezugszeichen 1 soll die Außenfläche einer Karosserie beispielsweise eines Personenkraftwagens bezeichnen, an der ein schematisch dargestellter Fuß 2 des Außenspiegels in üblicherweise befestige ist und nach außen absteht. Aus dem Fuß 2 erhebt sich eine rohrförmige, an ihren Enden mit je einem radialen Flansch versehene, fußfeste Hülse 3, die von einer Tragplatte für ein Spiegelgehäuse 10 und einer Druckfeder umfaßt ist. Die um die Achse 5 der Hülse 3, die im Sinne der Ansprüche die zweite Achse bildet, drehbbare Tragplatte wird durch die Druckfeder auf den Fuß gedrückt, wobei zwischen Tragplatte und Fuß das Spiegelgehäuse 10 in seiner Gebrauchslage haltende und durch Schlag auf das Spiegelgehäuse 10 entkoppelbare Rasten vorgesehen sind. Die fußfeste Hülse 3 trägt ferner ein Ritzel 6, welches normalerweise relativ zum Fuß 2 unverdrehbar, jedoch bei dem erwähnten Schlag gegenüber dem Fuß 2 drehbar ist. Zu Einzelheiten dieser Befestigungsart des Spiegelgehäuses 10 am Fuß 2 wird auf die Schrift EP-A-166 378 insoweit Bezug genommen.

Die rückseitige Öffnung des sonst allseits geschlossenen Spiegelgehäuses 10 umschließt den Spiegel 20, welcher eine rückseitig verspiegelte Spiegelscheibe 22 aufweist, die rückseitig auf eine Spiegelglasträgerplatte 24 aufgeklebt ist. An die Mitte der Spiegelglasträgerplatte 24 ist über ein Distanzstück 26 eine Kugel 28 angeformt, durch deren Mittelpunkt 27 sich die zur Spiegelglasplatte 22 parallele Verstellachse 25 erstreckt, die im Sinne der Ansprüche die erste Achse bildet. Die Kugel 28 ist in einer Kugelpfanne 30 eingefangen, welche aus mehreren, die Kugel 28 umgebenden und an dieser radial-elastisch anliegenden Fingern besteht. Die Kugelpfanne 30 sitzt auf einem Ständer 32, welcher am Boden der Innenseite des Spiegelgehäuses 10 befestigt ist.

An die Innenseite des Spiegelgehäuses 10 ist auf der relativ zum Ständer 32 fußnahen Seite ein Lagerbock 12 befestigt, durch dessen Bohrung 14 sich das Gehäuse 42 eines im ganzen mit 40 bezeichneten Elektromotors so erstreckt, daß das Gehäuse 42 um eine zur ersten Achse 25 parallele Achse 45 in der Bohrung 14 drehbar ist. Die Abtriebswelle 44 des Motors 40 erstreckt sich aus dem Gehäuse 42 in Richtung auf den Fuß 2 und trägt an ihrem freien Ende eine Schnecke 46, die mit dem Ritzel 6 kämmt. Dabei ist die Verzahnung zwischen der Schnecke 46 und dem Ritzel 6 so ausgelegt, daß zwischen der Schnecke 46 und dem Ritzel 6 eine merkbare Antriebshemmung für das Ritzel 6 besteht. Die Abtriebswelle 44, deren Mittellinie mit der Achse 45 fluchtet, steht in drehfester Verbindung mit dem Läufer des Elektromotors 40 und das Gehäuse 42 ist fest mit dessen Ständer verbunden. Wenn daher die Ständerwicklung des Motors 40 vom Strom durchflossen ist, wird sich die Abtriebswelle 44 wegen der Antriebshemmung am Ritzel 6 nicht drehen sondern der Ständer mit dem Gehäuse 42 werden sich im Lager 12 um den Läufer drehen. Erst wenn das Gehäuse 42 über eine elektromagnetische Kupplung oder Magnetbremse 48 an dem Lager 12 und damit dem Spiegelgehäuse 10 unverdrehbar festgelegt ist, kann die Abtriebswelle 44 die Antriebshemmung überwinden, so daß die sich drehende Schnecke 46 auf dem feststehenden Ritzel 6 abläuft und das Spiegelgehäuse 10 in der einen oder anderen Richtung je nach Drehsinn der Schnecke 46 um die Achse 5 verschwenkt.

An der dem Fuß 2 abgewandten Stirnseite des Gehäuses 42 ist eine Exzenterscheibe 34 koaxial zur Achse 45 befestigt, welche einen parallel zur Achse 45 vorstehenden Exzenter 36 trägt. Der Exzenter 36 sitzt in einem Auge einer Kurbel 38, deren anderes Ende in an die Rückseite der Spiegelglasträgerplatte 24 angeformten Lagerböcken 21, 23 gehalten und um eine zur Achse 25 parallele Achse schwenkbar angelenkt ist.

Nicht dargestellt ist der Stomversorgungskreis für den Elektromotor 40, zu welchem drei Schalter im Inneren des Fahrzeugs gehören können. Wird ein erster Schalter betätigt, wird der Ständer des Elektromotors 40 vom Strom durchflossen, so daß aufgrund der Antriebshemmung das Motorgehäuse 42 im Lager 12 dreht und solange, wie der erste Schalter eingeschaltet bleibt, den Spiegel 20 um die Achse 25, die bei an das Fahrzeug anmontiertem Außenspiegel im wesentlichen horizontal liegt, nach oben oder unten verstellt. Die Verstellung des Spiegels 20 nach oben oder unten bestimmt sich ersichtlich nach der Drehrichtung des Motorgehäuses und danach, ob das Gelenk 21, 38, 23 oberhalb oder unterhalb der Kugel 28 am Spiegel 20 vorgesehen ist. Der Winkelbereich, um den der Spiegel 20 verstellbar ist, beträgt üblicherweise + oder - 20° zu der in der Zeichnung dargestellten Normallage. Nicht dargestellte mechanische oder elektrische Stopps sorgen dafür, daß der Spiegel 20 über diesen Winkelbereich hinaus nicht verstellt werden kann.

Der zweite Schalter aktiviert bei seiner Betätigung ebenfalls den Elektromotor 40, sowie gleichzeitig die elektromagnetische Kupplung 48, so daß das Motorgehäuse 42 relativ zum Spiegelgehäuse 10 festgelegt ist. Der Stromfluß durch den Elektromotor 40 bewirkt jetzt eine Überwindung der Antriebshemmung, so daß das Schraubenrad 46 auf dem relativ zum Fuß 2 feststehenden Ritzel 6 abläuft und das Spiegelgehäuse 10 mit Spiegel 20 um die Achse 5 (die bei an das Fahrzeug anmontiertem Außenspiegel im wesentlichen vertikal verläuft) in der einen oder anderen Richtung verschwenkt je nach Drehrichtung der Abtriebswelle 44. Die Stellung des Spiegels 20 relativ zur horizontale Achse 25 bleibt dabei unberührt.

Bei Betätigen des dritten Schalters wird die elektromagnetische Kupplung 48 aktiviert und legt das Motorgehäuse 42 am Spiegelgehäuse 10 fest. Gleichzeitig wird die an einem im ganzen mit 50 bezeichneten und schematisch dargestellten Drehwinkelgeber, beispielsweise einem Potentiometer abgegriffene Schwenklage des Spiegels 20 bezüglich der vertikalen Achse 5 in einen nicht dargestellten elektrischen Speicher übernommen. Das spiecelghäuse 10 mit Spiegel 20 kann jetzt an das Fahrzeug beigeklappt werden und schwenkt dabei um die Achse 5. Die Beiklapprichtung nach vorne oder hinten hängt wieder von der Drehrichtung der Abtriebswelle 44 des Elektromotors 40 ab. Wieder bleibt die Position des Spiegels 20 bezüglich der Achse 25 unberührt. Soll durch Betätigen des dritten Schalters in der umgekehrten Richtung das Spiegelgehäuse 10 wieder in seine in der Zeichnung dargestellten Gebrauchslage überführt werden, bleibt der über den dritten Schalter laufende Stromkreis solange geschlossen, bis die aus dem Speicher abgerufene Schwenkstellung des Spiegelgehäuses 10 bezüglich der Achse 5 wieder erreicht ist.

Das Potentiometer 50 weist zweckmäßigerweise einen schematisch dargestellten fußfesten Abgriff 52, sowie eine spiegelgehäusefeste Widerstandsschicht 54 auf.

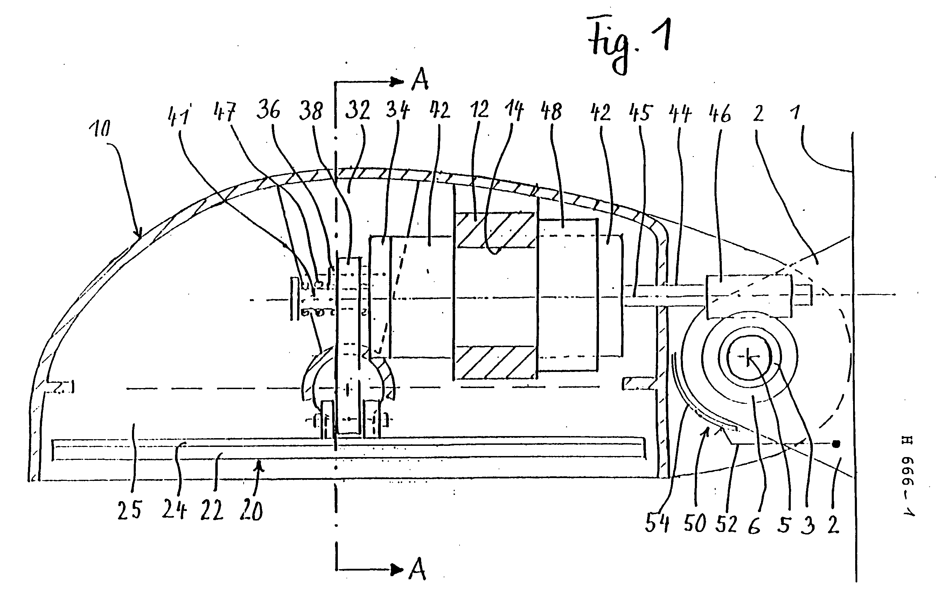

In Fig. 1 ist eine vereinfachte Ausführungsform des erfindungsgemäßen Außenspiegels ergänzend dargestellt. Diese vereinfachte Ausführungsform kommt ohne die elektromagnetische Kupplung 48 aus. Aus der fußfernen Stirnfläche des Motorgehäuses 42 steht ein mit dem Motorgehäuse 42 fest verbundener und am freien Ende verbreiteter Stift 41 vor, der koaxial zur Achse 45 angeordnet ist. Vor der fußfernen Stirnfläche des Motorgehäuses 42 sitzt auf dem Stift 41 eine Kupplungsscheibe 34, die von einer den Stift 41 umgebenden und an seinem verbreiteten Ende sich abstützenden Feder 47 gegen die fußferne Stirnfläche des Motorgehäuses 42 gepreßt wird. Der dadurch hergestellte Reibschluß zwischen der Scheibe 34 und dem Motorgehäuse 42 ist größer als die Antriebshemmung.

Im übrigen ist die Kurbelverbindung zwischen dem Exzenter 36 der Scheibe 34 und dem Spiegel 20 so wie oben beschrieben ausgeführt.

Wird der erwähnte erste Schalter im Stromkreis des Elektromotors 40 eingeschaltet, bleibt die Abtriebswelle 44 wegen der Antriebshemmung an der Drehung gehindert, so daß das Motorgehäuse 42 sich im Lager 12 dreht und über den Kurbelmechanismus 36, 38, 21, 23 den Spiegel 20 um die Achse 25 verstellt. Wenn der Spiegel 20 gegen einen seinen Verstellwinkelbereich begrenzenden Anschlag anläuft, wird das Motorgehäuse 42 wegen des starken Reibschlusses mit der Scheibe 34 an der Weiterdrehung gehindert, so daß die Abtriebswelle 44 jetzt die Antriebshemmung mit dem Ritzel 6 überwinden kann und das Spiegelgehäuse relativ zum Fuß 2 beiklappt.

Bei dieser vereinfachten Ausführungsform der Erfindung ist es wünschenswert, beim Verstellen des Spiegels 20 um die Achse 5 dessen Position relativ zur Achse 25 abzuspeichern, was mittels eines schematisch dargestellten Drehwinkelgebers etwa in Form eines Potentiometers 60 gelingt. Das Potentiometer 60 umfaßt eine auf die Scheibe 34 aufgebrachte Widerstandsschicht 64 sowie einen spiegelgehäusefesten Abgriff 62 für diese. Bei Betätigen des zweiten Schalters zwecks Verstellung des Spiegels 20 um die Achse 5 wird daher zuerst die Position des Spiegels 20 bezüglich der Achse 25 vermöge der Stellung des Potentiometers 60 abgespeichert. Hat der Spiegel 20 bezüglich der Achse 5 die gewünschte Winkelstellung erreicht, wird zwar der zweite Schalter im Sinne einer Unterbrechung des Stromflusses durch den Elektromotor 40 ausgeschaltet; jedoch ist elektrisch dafür Vorsorge getroffen, daß der Stromfluß durch den Elektromotor in umgekehrter Richtung sich solange fortsetzt, bis der Spiegel 20 wieder die abgespeicherte Position bezüglich der Achse 25 eingenommen hat.

Die beschriebene vereinfachte Ausführungsform der Erfindung ermöglicht ein manuelles Verstellen der Spiegelscheibe. Bei der Handverstellung wird der Reibschluß zwischen der Scheibe 34 und dem Motorgehäuse 42 überwunden.

Statt des dargestellten Antriebs zwischen dem Schneckenrad 46 und dem Ritzel 6 kommen auch andere Antriebsarten wie beispielsweise Zahnstangen/Zahnrad oder ein Schneckengetriebe in Betracht. Ferner versteht es sich, daß der Elektromotor 40 innerhalb seines Gehäuses ein Untersetzungsgetriebe aufweisen kann, über welches die Abtriebswelle 44 mit dem Läufer verbunden ist.

Es liegt ferner im Rahmen der Erfindung, bei der beschriebenen einfacheren Ausführungsform der Erfindung an der Außenseite des Motorgehäuses 42 eine Nase und im Spiegelgehäuse 10 Anschläge im Drehweg der Nase vorzusehen, so daß die Winkelbegrenzung der Verstellung des Spiegels 20 um die Achse 25 durch Anlaufen der Nase gegen den einen oder den anderen der Anschläge gegeben ist.

## Patentansprüche

1. Außenspiegel für ein Fahrzeug, bei dem ein Spiegelgehäuse (10), in welchem ein um wenigstens eine erste Achse (25) innerhalb eines vorgegebenen Winkelbereichs elektrisch verstellbarer Spiegel (20) angeordnet ist, um eine zweite Achse (5) klappbar an einem am Fahrzeug befestigbaren Fuß (2) angelenkt und durch Aktivieren eines Elektromotors (40) beiklappbar ist, wobei ein erstes Abtriebsorgan (44) des Motors (40) über eine vorgegebene, überwindbare Antriebshemmung mit dem Fuß (2) gekoppelt ist, dadurch gekennzeichnet, daß ein mit dem ersten Abtriebsorgan (44) elektromagnetisch gekoppeltes zweites Abtriebsorgan (42) des Motors (40) über ein Gelenk (36, 38, 21, 23) mit dem Spiegel (20) gekoppelt und in dem Spiegelgehäuse (10) drehbar derart gelagert ist, daß die Lagerreibung des zweiten Abtriebsorgans (42) kleiner als die Antriebshemmung ist.

2. Spiegel nach Anspruch 1, dadurch gekennzeichnet, daß das erste Abtriebsorgan des Elektromotors (40) seine Abtriebswelle (44) und das zweite Abtriebsorgan das Motorgehäuse (42) ist.

3. Spiegel nach Anspruch 1 oder 2, dadurch gekennzeichnet, daß das zweite Abtriebsorgan (42) des Motors (40) über eine elektromagnetische Kupplung(48) mit dem Spiegelgehäuse (10) verbunden ist.

4. Spiegel nach Anspruch 1 oder 2, dadurch gekennzeichnet, daß zwischen dem zweiten Abtriebsorgan (42) des Elektromotors (40) und dem Spiegel (20) eine mechanische Kupplung (34, 41, 47) zwischengeschaltet chanische Kupplung (34, 41, 47) zwischengeschaltet ist.

5. Spiegel nach einem der vorstehenden Ansprüche, dadurch gekennzeichnet, daß die Winkelstellung des Spiegels (20) um die erste Achse (25) mittels eines Drehgebers (60) abspeicherbar ist.

6. Spiegel nach einem der vorstehenden Ansprüche, dadurch gekennzeichnet, daß die Stellung des Spiegels (20) um die zweite Achse (5) mittels eines weiteren Drehgebers (50) speicherbar ist.

7. Spiegel nach einem der vorstehenden Ansprüche, dadurch gekennzeichnet, daß die erste Achse (25) und die zweite Achse (50) sich quer zueinander erstrekken.

8. Spiegel nach einem der vorstehenden Ansprüche, dadurch gekennzeichnet, daß die Achse (45) des Elektromotors (40) sich parallel zur ersten Achse (25) erstreckt.

9. Spiegel nach einem der vorstehenden Ansprüche, dadurch gekennzeichnet, daß der Elektromotor (40) ein Getriebemotor ist.

10. Spiegel nach einem der vorstehenden Ansprüche, dadurch gekennzeichnet, daß das zweite Abtriebsorgan (42) des Motors (40) über einen Kurbeltrieb (36, 38, 21, 23) außermittig mit dem Spiegel (20) gekoppelt ist, welcher mittig über ein Kugelgelenk (28) mit dem Spiegelgehäuse (10) gekoppelt ist.

## Claims

1. An exterior mirror for a vehicle for which a mirror housing (10) in which a mirror (20) is arranged within a predetermined angular area so as to be adjustable electrically around at least one first axis (25), is articulated on the mirror base (2) which can be fitted to a vehicle, so as to be tilted around a second axis (5) and can be clapped back by activating an electric motor (40), a first output body (44) of the motor (40) being coupled with the mirror base (2) via a predetermined drive escapement which can be surmounted, characterized in that a second output body (42) of the motor (40) which is electromagnetically coupled with the first output body (44) is coupled with mirror (20) via an articulation (36, 38, 21, 23) and is rotatably lodged in the mirror housing (10) in such a way that the bearing friction of the second output body (42) is smaller than the drive escapement.

2. A mirror according to claim 1, characterized in that the first output body of the electric motor (40) is its output shaft (44) and the second output body is the motor housing (42).

3. A mirror according to claim 1 or 2, characterized in that the second output shaft (42) of the motor (40) is bound to the mirror housing (10) by an electromagnetic coupling connection (48).

4. A mirror according to claim 1 or 2, characterized in that between the second output body (42) of the electric motor (40) and the mirror (20) a mechanic coupling connection (34, 41, 47) is interposed.

5. A mirror according to one of the preceding claims, characterized in that the angular position of the mirror (20) around the first axis (25) can be memorized by means of a rotation transmitter (60).

6. A mirror according to one of the preceding claims, characterized in that the position of the mirror (20) around the second axis (5) can be memorized by means of a further rotation transmitter (50).

7. A mirror according to one of the preceding claims, characterized in that the first axis (25) and the second axis (50) extend transversely to each other.

8. A mirror according to one of the preceding claims, characterized in that the axis (45) of the electric motor (40) extends parallel to the first axis (25).

9. A mirror according to one of the preceding claims, characterized in that the electric motor (40) is a gear motor.

10. A mirror according to one of the preceding claims, characterized in that the second output body (42) of the motor (40) is excentrically coupled with the mirror (20) via a crank mechanism (36, 38, 21, 23) which is axially coupled with the mirror housing (10) via a ball-and-socket joint (28).

## Revendications

1. Rétroviseur extérieur pour véhicule, pour lequel un boîtier (10), présentant un miroir (20) disposé de manière à être électriquement réglable dans les limites d'un angle donné autour d'au moins un premier axe (25), est articulé autour d'un deuxième axe (5) sur un pied (2) pouvant être fixé au véhicule de manière à être pivotable et est rabattable sous l'action d'un moteur électrique (40), un premier organe récepteur (44) du moteur (40) étant accouplé au pied (2) par l'intermédiaire d'un échappement d'entraînement surmontable, caractérisé en ce qu'un deuxième organe récepteur (42) du moteur (40) accouplé de façon électromagnétique au premier organe récepteur (44) par l'intermédiaire d'une articulation (36, 38, 21, 23) est accouplé au miroir (20) et est logé dans le boîtier du miroir (10) de façon rotative en sorte que le frottement dans les paliers du deuxième organe récepteur (42) est inférieur à l'échappement d'entraînement.

2. Rétroviseur suivant la revendication 1, caractérisé en ce que le premier organe récepteur du moteur électrique (40) est son arbre récepteur (44) et le deuxième organe récepteur est le boîtier du moteur (42).

3. Rétroviseur suivant la revendication 1 ou 2, caractérisé en ce que le deuxième organe récepteur (42) du moteur (40) est relié au boîtier du miroir (10) par l'intermédiaire d'un accouplement électromagnétique (48).

4. Rétroviseur suivant la revendication 1 ou 2, caractérisé en ce que entre le deuxième organe récepteur (42) du moteur électrique (40) et le miroir (20) un accouplement mécanique (34, 41, 47) est intercalé.

5. Rétroviseur suivant l'une des revendications précédentes, caractérisé en ce que la position angulaire du miroir (20) autour du premier axe (25) est mémorisable au moyen d'un émetteur de rotations (60).

6. Rétroviseur suivant l'une des revendications précédentes, caractérisé en ce que la position du miroir (20) autour du deuxième axe (5) est mémorisable au moyen d'un autre émetteur de rotations (50).

7. Rétroviseur suivant l'une des revendications précédentes, caractérisé en ce que le premier axe (25) et le deuxième axe (50) s'étendent de façon transversale l'un par rapport à l'autre.

8. Rétroviseur suivant l'une des revendications précédentes, caractérisé en ce que l'axe (45) du moteur électrique (40) s'étend de façon parallèle par rapport au premier axe (25).

9. Rétroviseur suivant l'une des revendications précédentes, caractérisé en ce que le moteur électrique (40) est un moteur à engrenage.

10. Rétroviseur suivant l'une des revendications précédentes, caractérisé en ce que le deuxième organe récepteur (42) du moteur (40) est accouplé au miroir (20) de façon excentrique via un mécanisme à bielle (36, 38, 21, 23), lequel miroir est accouplé de façon axiale au boîtier du rétroviseur (10) via un joint à bille (28).
